# EUROPEAN PATENT SPECIFICATION

(11) **EP 1 508 473 B1**
(45) Date of publication and mention of the grant of the patent: **30.12.2009**
(21) Application number: 04077383.0
(22) Date of filing: 20.08.2004
(51) Int. Cl.: B60P 3/06, B60P 1/00, B66F 9/075

(54) **A trailer with forklift transport compartment**
Anhänger mit Laderaum für Gabelstapler
Remorque avec un compartiment pour chariot élévateur

(30) Priority: 20.08.2003 GB 0319561
(43) Date of publication of application: 23.02.2005
(73) Proprietor: Hughes, Malachy, Dungannon, County Tyrone BT70 1TA (GB)
(72) Inventor: Hughes, Malachy, Dungannon, County Tyrone BT70 1TA (GB)
(74) Representative: Wallace, Alan Hutchinson

(56) References cited:
- EP-A- 0 659 679
- DE-A1- 2 359 418
- US-A- 3 695 471
- US-A- 4 571 139
- US-A- 4 828 449
- US-A1- 2002 057 959

## Description

### Field of the Invention

The present invention relates to trailers and load-carrying vehicles, especially those adapted to carry a forklift vehicle.

Such a trailer is known from DE 2359418.

### Background to the invention

When transporting large or heavy loads of goods on a trailer, flatbed truck or other vehicle, it is usually necessary to utilise a forklift both to load and unload the goods from the trailer. Depending on where the goods are being delivered to or collected from, there may or may not be a forklift on site for this purpose. It is therefore often necessary to bring a small forklift from location to location with the trailer.

Conventionally, when it is necessary to transport a forklift with a standard trailer, the forklift is mounted onto the rear of the trailer by means of an integrated, or retro-fitted, forklift mounting kit. Such systems exhibit a number of disadvantages which offset the benefits of having a forklift immediately available. For example, mounting the forklift at the rear of the trailer increases the length of the trailer, thus requiring greater skill and care during driving and parking. In addition, mounting a forklift in this manner requires significant time and effort. The forklift must initially be suitably positioned at the rear of the trailer, adjacent the mounting kit.
The mounting kit is then engaged with the forklift, which must be carefully secured thereto. The mounting kit then raises the forklift off the ground, typically by means of a hydraulic or pneumatic system, and is then locked in place. The trailer must therefore have an existing hydraulic/pneumatic supply, from which a supply line must be extended to the forklift mounting kit. Moreover, there is significant danger involved in hoisting the forklift off the ground, and again when removing the forklift from the mounting kit. Every year a significant number of accidents and fatalities occur when loading/unloading forklifts in this manner.

It will be understood that the word "trailer" as used herein is intended to embrace any load-carrying vehicle, or portion of a vehicle, including trailers for demountable attachment to a truck, tractor unit or other trailer (e.g. as used with articulated vehicles), and trailers that are fixed to, or integral with, the truck or tractor unit (e.g. as found in lorries or flatbed trucks).

### Summary of the invention

The invention provides a trailer comprising a load storage area; and a compartment for a vehicle, the compartment comprising a doorway by which the compartment is accessible independently of the storage area, and wherein the compartment includes an end wall opposite the doorway, at least one time-receiving recess is formed in or adjacent the end wall.

In the preferred embodiment, the doorway is associated with a gate, the gate being operable between a closed state, in which it at least partially closes the doorway, and a deployed state in which it provides a ramp to the compartment. The gate may be pivotably mounted on the trailer at, or adjacent, an in use lower edge of the doorway. The gate provides a wall to the compartment when in the closed state.

Preferably, the floor of the compartment is lower than the floor of the storage area.

Advantageously, an end wall of the compartment terminates at approximately the level of the floor of the storage area.

The level of the compartment floor may be below the level of the trailer chassis.

The compartment may be located rearwardly of the rear axle.

Further advantageous aspects of the invention will become apparent to those ordinarily skilled in the art upon review of the following description of a specific embodiment of the invention and with reference to the accompanying drawings.

### Brief Description of the Drawings

An embodiment of the present invention is now described by way of example and with reference to the accompanying drawings, in which:
Figure 1 is a perspective side view of a trailer embodying the present invention, also showing a forklift;
Figure 2 is a rear view of the trailer of Figure 1, in which the forklift has been omitted; and
Figure 3 is a rear view of the trailer of Figure 1, in which a forklift is located within the compartment.

### Detailed Description of the Drawings

Referring now to the accompanying drawings, there is illustrated a trailer, generally indicated as 10, for transporting a load-lifting vehicle such as a forklift vehicle, or forklift 14, in addition to any conventional load (not shown) to be transported by the trailer 10.

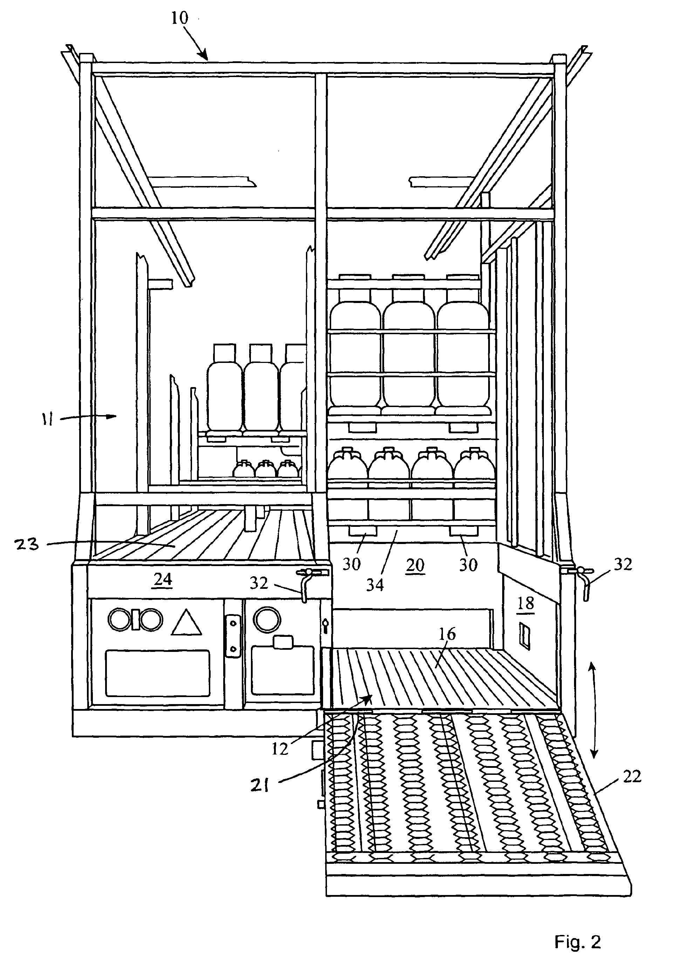

The trailer 10 may be of any conventional form, which is adapted to transport goods of any shape or size. In the illustrated embodiment, the trailer 10 is of the side loading variety, in which goods are loaded and unloaded through open sides 11 of the trailer 10 (the sides 11 may or may not be covered during transit by, for example, shutters or tarpaulin (not shown). The trailer 10 includes a load storage area 15 which has a floor 23. The trailer 10 further comprises an enclosure, or compartment 12, preferably at the rear thereof, which compartment 12 is shaped and dimensioned to receive a vehicle, such as the forklift 14, for transport with the trailer 10. The compartment 12 comprises an entrance, or doorway 13, by which the compartment is accessible independently of the remainder of the trailer 10, namely the storage area 15. Hence, the forklift 14 may be loaded into, and unloaded from, the trailer 10 without disturbing or moving any of the goods on the trailer 10. For illustration purposes, Figure 2 shows the storage area 15 partially loaded with gas tanks 17. As indicated above, for loading or unloading goods 17, access to the storage area 15 may be obtained via the sides 11 of the trailer 10. In alternative embodiments (not illustrated), the trailer may comprise on or more doors or shutters that allow access to the storage area independently of the compartment.

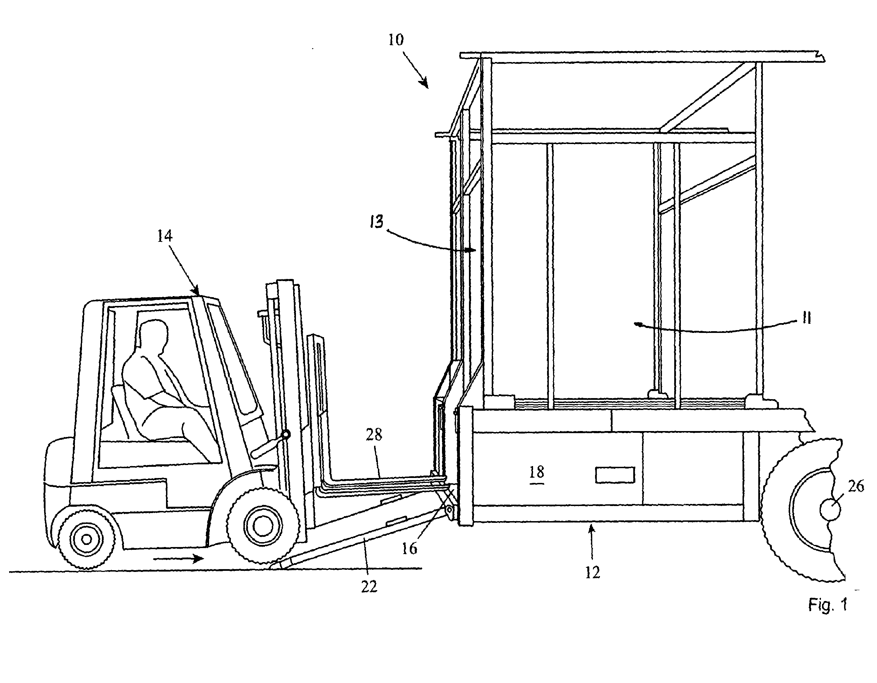

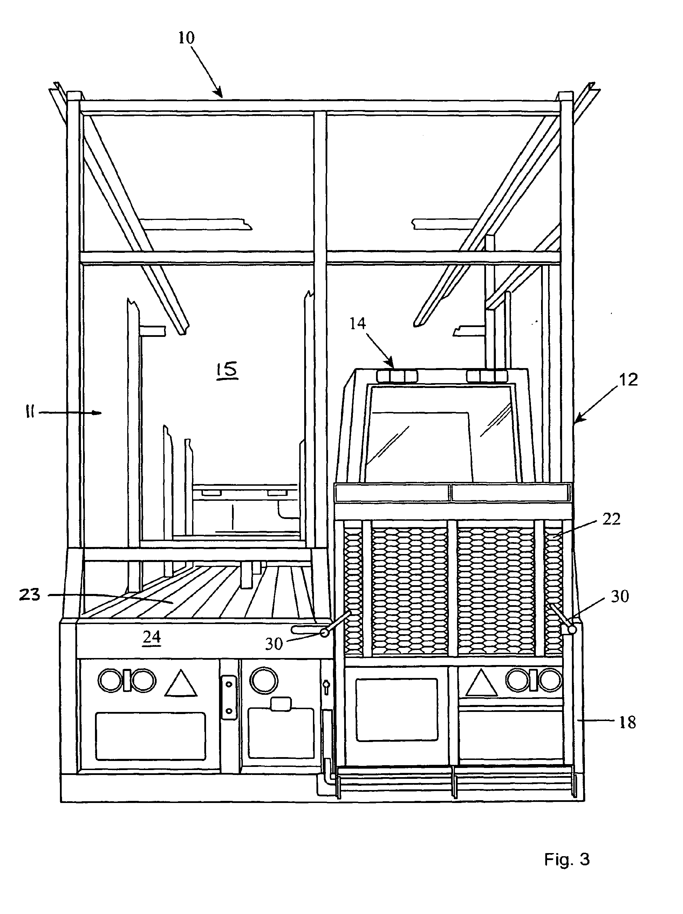

The compartment 12 comprises a floor or base 16, flanked by two oppositely disposed side walls 18 (only one visible). An end, or rear, wall 20 extends between the side walls 18 and is oppositely disposed with respect to the doorway 13. A gate 22 is associated with the doorway 13 and is operable between a closed state (shown in Figure 3), in which it serves as an end, or front, wall of the compartment and at least partially closes the doorway 13, and an open, or deployed, state (shown in Figures 1 and 2) in which it serves as a ramp to and from the compartment 12. To this end, the gate 22 is, conveniently, pivotably connected (e.g. using conventional hinges 21 or other conventional means) to the trailer 10 at or adjacent the base 16 of the compartment 12 where the (in use) lower edge of the doorway 13 is defined. In the illustrated embodiment, the compartment 12 is located at the rear of the trailer 10 (i.e. distal the truck or tractor unit (not shown) that, during use, pulls the trailer 10), the doorway 13 faces rearwardly and the gate 22 opens rearwardly. In an alternative embodiment, the doorway 13 may face sidewardly of the trailer 10 and the gate 22 may open sidewardly.

In order to ensure that the compartment 12 has sufficient headroom to accommodate the forklift 14, the base 16 of the compartment is located beneath the level of the storage area floor 23. Hence, the trailer 10 has a split-level base or floor 16, 23, as may best be seen from Figure 2. Commonly, the level of the storage area floor 23 is determined by the level of the chassis 24 of the trailer 10. Typically, the storage area floor 23 is supported directly by the chassis 24 (although an intermediate spacing structure (not shown) may be provided). Hence, the level of the floor 16 of the compartment 12 may be below the level of the chassis 24, while the level of the floor 23 of the storage area is substantially at or above the level of the chassis 24.

Accordingly, when forming the compartment 12, the chassis 24 may be cut away (for example a at a rear corner (left or right) of the trailer 10), in order to accommodate the compartment 12. It will be understood that the compartment need not necessarily be located at one or other rear corners of the trailer 10. For example, the compartment may be located between the rear corners of the trailer 10, e.g. generally centrally located at the rear of the trailer 10.

The compartment 12 need not necessarily be located at the rear of the trailer 10. However, it is preferred that the compartment 12 is located behind the rear axle 26 of the trailer in order to allow the base 16 to be as low as possible while avoiding fouling the rear axle 26. Location of the base 16 at a relatively low level also reduces the gradient of the ramp 22 when deployed and this facilitates entry of the forklift 14 into the compartment 12 and reversal of the forklift 14 out of the compartment 12.

The trailer 10 may be provided with a suitably adapted electro-mechanical, hydraulic or pneumatic actuator (not shown) for operating the gate 22 between the closed and deployed states. Locking means, conveniently in the form of manual locks 32, are preferably provided to secure the gate 22 in the closed state. Any other suitable form of locking means (not shown) may be provided, whether manually or automatically actuated, in order to secure the gate 22.

The compartment 12 is primarily intended to store and transport forklifts such as the forklift 14, which includes a fork having pair of spaced apart tines 28 projecting forwardly of the forklift 14. To keep the size of the compartment as small as possible, it is preferred that the end wall 20 terminates at or adjacent the level of the storage area floor 23 so that, when the forklift 14 is in the compartment 12, the tines 28 can project beyond the rear wall 20 and be seated on, or be located adjacent the floor 23, thereby minimising the space and obstruction caused by same. A platform (not illustrated) may be provided in the storage area 15 adjacent the end wall 20, the platform being open ended facing the compartment 12 so that, during use, the tines 28 may be inserted beneath the platform. Similarly, in the illustrated embodiment, according to the invention a pair of recesses 30 are provided in a pallet 34 located adjacent the rear wall 20, which recesses 30, in use, receive the pair of tines 28, thereby allowing the overall length of the compartment 12 to be just greater than that of the wheel base of the forklift 14. Thus, according to the invention, one or more tine-receiving recesses or apertures (not shown) may be provided in the end wall 20 such that the tines 28 may be inserted beneath the floor 23 when the forklift 14 is in the compartment 12.

The compartment 12 allows the forklift 14 to be quickly and easily driven into the compartment 12, and therefore onto the trailer 10, and equally to be unloaded from the compartment 12 as required. The compartment 12 does not alter the length of the trailer 10 when the forklift 14 is located therein and obviates the need for awkward and time consuming mounting gear (not shown) to be located at the rear of the trailer 10.

The present invention is not limited to the embodiments described herein, which may be modified or varied without departing from the scope of the invention, as defined by the appended claims.

## Claims

1. A trailer (10) comprising a load storage area (15); and a compartment (12) for a vehicle, the compartment comprising a doorway (13) by which the compartment is accessible independently of the storage area; **characterized in that** the compartment includes an end wall (20) opposite the doorway (13), at least one tine-receiving recess (30) being formed in or adjacent the end wall.

2. A trailer as claimed in Claim 1, wherein the doorway is associated with a gate (22), the gate being operable between a closed state, in which it at least partially closes the doorway, and a deployed state in which it provides a ramp to the compartment.

3. A trailer as claimed in Claim 1 or 2, wherein the gate (22) is pivotably mounted on the trailer at, or adjacent, an in use lower edge of the doorway (13).

4. A trailer as claimed in Claim 2 or 3, wherein said gate (22) provides a wall to the compartment when in the closed state.

5. A trailer as claimed in any preceding claim, wherein the storage area (15) and the compartment (12) each comprise a respective floor, the floor (16) of the compartment being, during use, lower than the floor (23) of the storage area.

6. A trailer as claimed in Claim 5, wherein the compartment includes an end wall (20) opposite the doorway (13), the end wall terminating at approximately the level of the floor (23) of the storage area.

7. A trailer as claimed in any preceding claim, wherein the trailer comprises a chassis (24) and the compartment (12) comprises a floor (16), the level of the compartment floor being below the level (23) of the trailer chassis (24).

8. A trailer as claimed in any preceding claim, wherein the trailer comprises a rear axle, the compartment (12) being located rearwardly of the rear axle.

## Patentansprüche

1. Anhänger (10), der eine Lastlagerfläche (15) und eine Abteilung (12) für ein Fahrzeug aufweist, wobei die Abteilung einen Eingang (13) aufweist, durch den die Abteilung unabhängig von der Lagerfläche zugänglich ist, **dadurch gekennzeichnet, dass** die Abteilung eine dem Eingang (13) gegenüberliegende Endwand (20) aufweist, wobei mindestens eine Zinkenaufnahmeaussparung (30) in der oder angrenzend an die Endwand ausgebildet ist.

2. Anhänger nach Anspruch 1, bei dem der Eingang mit einem Tor (22) verknüpft ist, wobei das Tor zwischen einem geschlossenen Zustand, in dem es wenigstens teilweise den Eingang verschließt, und einem aufgeklappten Zustand betätigt werden kann, in dem es eine Rampe zu der Abteilung bereitstellt.

3. Anhänger nach Anspruch 1 oder 2, bei dem das Tor (22) schwenkbar an dem Anhänger an oder angrenzend einer in Gebrauch unteren Kante des Eingangs (13) angebracht ist.

4. Anhänger nach Anspruch 2 oder 3, bei dem das Tor (22) eine Wand zu der Abteilung bereitstellt, wenn es im geschlossenen Zustand ist.

5. Anhänger nach einem vorhergehenden Anspruch, bei dem die Lagerfläche (15) und die Abteilung (12) jeweils einen jeweiligen Boden aufweisen, wobei der Boden (16) der Abteilung in Gebrauch niedriger als der Boden (23) der Lagerfläche ist.

6. Anhänger nach Anspruch 5, bei dem die Abteilung eine dem Eingang (13) gegenüberliegende Endwand (20) umfasst; und die Endwand ungefähr auf der Höhe des Bodens (23) der Lagerfläche endet.

7. Anhänger nach einem vorhergehenden Anspruch, wobei der Anhänger ein Chassis (24) aufweist und die Abteilung (12) einen Boden (16) aufweist, wobei sich die Höhe des Abteilungsbodens unter der Höhe (23) des Anhängerchassis (24) befindet.

8. Anhänger nach einem vorhergehenden Anspruch, wobei der Anhänger eine Hinterachse aufweist und die Abteilung (12) sich hinter der Hinterachse befindet.

## Revendications

1. Remorque (10) comportant une zone de stockage de charge (15) ; et un compartiment (12) pour un véhicule, le compartiment comportant une porte (13) par laquelle le compartiment est accessible indépendamment de la zone de stockage ; **caractérisé en ce que** le compartiment comprend une paroi d'extrémité (20) située de manière opposée par rapport à la porte (13), au moins un évidement de réception de griffe (30) étant formé dans la paroi d'extrémité ou adjacent à celle-ci.

2. Remorque selon la revendication 1, dans lequel la porte est associée à un portillon (22), le portillon fonctionnant entre un état fermé dans lequel il ferme au moins partiellement la porte, et un état déployé dans lequel il procure une rampe au compartiment.

3. Remorque selon la revendication 1 ou la revendication 2, dans lequel le portillon (22) est monté de manière pivotante sur la remorque au niveau d'un bord inférieur de la porte (13) lors de l'utilisation, ou de manière adjacente à celui-ci.

4. Remorque selon la revendication 2 ou la revendication 3, dans lequel ledit portillon (22) procure une paroi au compartiment quand il est dans l'état fermé.

5. Remorque selon l'une quelconque des revendications précédentes, dans lequel la zone de stockage (15) et le compartiment (12) comportent chacun un plancher respectif, le plancher (16) du compartiment étant, lors de l'utilisation, plus bas que le plancher (23) de la zone de stockage.

6. Remorque selon la revendication 5, dans lequel le compartiment comprend une paroi d'extrémité (20) située de manière opposée par rapport à la porte (13), la paroi d'extrémité se terminant approximativement au niveau du plancher (23) de la zone de stockage.

7. Remorque selon l'une quelconque des revendications précédentes, dans lequel la remorque comporte un châssis (24) et le compartiment (12) comporte un plancher (16), le niveau du plancher du compartiment étant en dessous du niveau (23) du châssis (24) de la remorque.

8. Remorque selon l'une quelconque des revendications précédentes, dans lequel la remorque comporte un essieu arrière, le compartiment (12) étant situé à l'arrière de l'essieu arrière.
